Europäisches Patentamt

European Patent Office

Office européen des brevets

(19)

(11) Veröffentlichungsnummer: **0 020 889**
B1

(12) **EUROPÄISCHE PATENTSCHRIFT**

(45) Veröffentlichungstag der Patentschrift:
03.03.82

(51) Int. Cl.³: **C 09 C 1/50**

(21) Anmeldenummer: 80101808.6

(22) Anmeldetag: 03.04.80

(54) **Russe für Druckfarben.**

(30) Priorität: 11.06.79 DE 2923642

(43) Veröffentlichungstag der Anmeldung:
07.01.81 Patentblatt 81/1

(45) Bekanntmachung des Hinweises auf die Patenterteilung:
03.03.82 Patentblatt 82/9

(84) Benannte Vertragsstaaten:
BE DE FR GB IT NL

(56) Entgegenhaltungen:
DE-A-2 700 940
FR-A-1 560 165
FR-A-2 349 628
US-A-3 865 926

(73) Patentinhaber: Degussa Aktiengesellschaft,
Weissfrauenstrasse 9, D-6000 Frankfurt am Main 1 (DE)

(72) Erfinder: Schumacher, Wilhelm, Dr.,
Fürstenbergstrasse 8, D-6450 Hanau (DE)
Erfinder: Kühner, Gerhard, Dr., Liesingstrasse 1,
D-6450 Hanau 9 (DE)
Erfinder: Rothbühr, Lothar, Dr., Volkerstrasse 10,
D-5030 Hürth-Herm. (DE)
Erfinder: Voll, Manfred, Dr., Greifenhagenstrasse 14,
D-6450 Hanau 9 (DE)

ACTORUM AG.

Russe für Druckfarben

Russ stellt das wichtigste Schwarzpigment für Druckfarben dar. Während früher das Buchdruckverfahren das wichtigste Druckverfahren war, hat sich mit den immer grösser werdenden Auflagen der Zeitungen, Magazine und Druckschriften ein Trend zu Druckverfahren ausgebildet, die pro Zeiteinheit wesentlich mehr Drucke ausstossen können. Da das schnelle Antrocknen sehr wesentlich für die pro Zeiteinheit zu druckenden Exemplare ist, kann das Ziel eines hohen Ausstosses nicht nur durch mechanische Weiterentwicklungen an den Druckmaschinen erreicht werden. Vielmehr war es erforderlich, auch die Druckfarben selbst weiterzuentwickeln und die Druckverfahren an die oben geschilderte Problematik anzupassen.

Das Offsetverfahren, das Heatsetverfahren und das Tiefdruckverfahren erlauben es, hochwertige Drucke mit relativ hoher Geschwindigkeit herzustellen.

Für diese Druckverfahren sind allerdings nicht alle Russtypen geeignet. Es hat sich herausgestellt, dass nur solche Russe für Offset, Heatsetdruckfarben und Tiefdruckfarben vorteilhaft einzusetzen sind, die den Druckfarben eine niedrige Fliessgrenze verleihen. Die Fliessgrenze ist die Kraft, die erforderlich ist, um die an sich thixotrope Druckfarbe zum Fliessen zu bringen. Niedrige Fliessgrenzen in schwarzen Druckfarben für schnelldruckende Maschinen können durch niedrigstrukturierte Russe erreicht werden. Eine Methode zur Bestimmung der Russstruktur wird durch DBP-Absorption nach der ASTM-Vorschrift D 2414/70 gegeben. Als niedrigstrukturiert werden hierbei Russe verstanden, die eine DBP-Zahl von weniger als 65 ml/100 g aufweisen.

Es ist bereits ein Russ bekannt, der, in die besprochenen Druckfarben eingebaut, eine äusserst geringe Fliessgrenze erzeugt. Dieser Russ ist der Printex® 200 der Anmelderin.

Dieser Russ kann durch folgende Prüfdaten charakterisiert werden:

| | | |
|---|---|---|
| Jodadsorption (DIN 53582) | mg/g | 46 |
| BET-Oberfläche (DIN 66131) | m²/g | 44 |
| Teilchendurchmesser elektronenmikroskopisch | nm | 56 |
| DBP-Absorption (ASTM D 2414/70) | ml/100 g | 46 |
| Farbstärke (DIN 53234) IRB 3 = 100 | % | 88 |

Obwohl dieser Russ ideal für Offsetdruckfarben, Heatsetdruckfarben und Tiefdruckfarben geeignet ist, haftet ihm ein Nachteil an. Dieser Nachteil ist der, dass der Russ nicht genügend schwarz ist, d.h. er hat keine ausreichende Farbtiefe.

Es sind zwar andere niedrigstrukturierte Russe bekannt, die eine höhere Farbtiefe erreichen; es handelt sich hier um Russe mit einer BET-Oberfläche von 80 - 100 m²/g und einer DBP-Absorption von 50 - 65 ml/100 g. Ein typischer Vertreter eines extrem niedrigstrukturierten Russes dieser Klasse ist der Versuchsruss A 345 der Anmelderin. Dieser Russ bringt zwar eine höhere Farbtiefe, d.h. dunklere Andrucke, ist aber hinsichtlich der Fliessgrenze nicht zufriedenstellend, weil diese sehr stark ansteigt.

Es hat sich, ausgehend von dieser Sachlage, überraschenderweise und auch für den Fachmann nicht voraussehbar herausgestellt, dass eine neue Russklasse in einem eng zu umschreibenden Gebiet in der Lage ist, die Forderungen zu erfüllen.

Die Anmeldung bezieht sich deshalb auf einen Russ, der Druckfarben eine niedrige Fliessgrenze und gute Farbtiefe verleiht und dadurch gekennzeichnet ist, dass er folgende Prüfdaten aufweist:

| | | |
|---|---|---|
| Jodadsorption (DIN 53582) | mg/g | 50 - 85 |
| BET-Oberfläche (DIN 66131) | m²/g | 50 - 80 |
| elektronenmikroskopischer Teilchendurchmesser | nm | 28 - 55 |
| DBP-Absorption (ASTM D 2414/70) | ml/100 g | 40 - 60 |
| Farbstärke (DIN 53234) IRB 3 = 100 | % | 90 - 110 |

Die Erfindung betrifft ferner die Verwendung dieses Russes zur Herstellung hochwertiger Druckfarben.

Die Erfindung soll durch die nachfolgenden Beispiele näher beschrieben und erläutert werden.

**Beispiel 1**

Es wird ein Heatsetfirnis hergestellt aus folgenden Bestandteilen:

820 Teile Thermex A 6 E
(handelsübliches Heatsetbindemittel mit 60% Festkörper, Hersteller Lawter Chemicals)
30 Teile Trionol 3 (langöliges Alkydharz)
150 Teile PKWF 4/7 (Heatset-Mineralöl)
48 g Russ wurden mit 252 g des vorstehenden

Firnisses vermischt und anschliessend 40 Minuten in einem Attritor dispergiert. Dann wurde mit einem Laray-Fallstabviskosimeter die Fliessgrenze ermittelt. Aus der Druckfarbe wurden ausserdem Andrucke mit definiertem Farbmengenauftrag hergestellt. Die Farbtiefe wurde mit einem Auflichtdensitometer «Multidens» gemessen. Hohe Densitometerwerte entsprechen einer hohen Farbtiefe.

Nachstehend werden die Eigenschaften der verwendeten Russe und die Messergebnisse an den Druckfarben bzw. an den Andrucken wiedergegeben:

|  |  | Russ A 345 | Russ gemäss Erfindung | Printex® 200 |
|---|---|---|---|---|
| **Russeigenschaften** |  |  |  |  |
| Jodzahl | mg/g | 93 | 73 | 46 |
| BET-Oberfläche | m²/g | 85 | 68 | 45 |
| Teilchendurchmesser elektronenmikroskopisch | nm | 25 | 40 | 56 |
| DBP-Absorption | ml/100 g | 52 | 46 | 46 |
| Farbstärke | % | 117 | 104 | 88 |
| **Fliessgrenze der Druckfarbe** | Pa | 31,0 | 0 | 0,2 |
| **optische Dichte des Andrucks bei** 2,0 g Druckfarbe | m² | 2,26 | 2,25 | 2,15 |

Die Tabelle zeigt die überragenden Eigenschaften der neuen Russklasse. Obwohl die Fliessgrenze extrem niedrig liegt, wird die optische Dichte = Farbtiefe eines an sich viel feinteiligeren Russes erreicht. Erst die Russe gemäss Erfindung erlauben es, diese wünschenswerte Kombination von niedriger Fliessgrenze und hoher Farbtiefe zu erreichen.

**Beispiel 2**

Es wird ein Offsetfirnis hergestellt aus folgenden Bestandteilen:

719 Teile Uroset (Offsetbindemittel)
144 Teile Trionol 3 (langöliges Alkydharz)
12 Teile Co-Naphthenat, 6% Co in Testbenzin
12 Teile Mn-Naphthenat, 6% Mn. in Testbenzin
107 Teile Leinöl Standöl 10 P
6 Teile Cyclohexanonoxim

48 g Russ werden mit 252 g des obigen Firnisses vermischt und viermal über eine Dreiwalze mit einem Anpressdruck von 10 bar gegeben. Anschliessend wird, wie in Beispiel 1, die Fliessgrenze bestimmt, Andrucke werden hergestellt, und die optische Dichte wird gemessen.

Hierbei wurden die nachstehenden Ergebnisse erhalten:

|  |  | Russ A 345 | Russ gemäss Erfindung | Printex® 200 |
|---|---|---|---|---|
| **Russeigenschaften** |  |  |  |  |
| Jodzahl | mg/g | 93 | 73 | 46 |
| BET-Oberfläche | m²/g | 85 | 68 | 45 |
| Teilchendurchmesser elektronenmikroskopisch | nm | 25 | 40 | 56 |
| DBP-Absorption | ml/100 g | 52 | 46 | 46 |
| Farbstärke | % | 117 | 104 | 88 |
| **Fliessgrenze der Druckfarbe** | Pa | 85 | 45 | 40 |
| **optische Dichte des Andrucks bei** 2,0 g Druckfarbe | m² | 2,38 | 2,34 | 2,20 |

Auch in diesem Beispiel werden die aussergewöhnlichen Eigenschaften der neuen Russklasse klar. Trotz Beibehaltung einer extrem niedrigen Fliessgrenze können erheblich farbtiefere Andrucke gewonnen werden. Dies ist die Voraussetzung für die Einsetzbarkeit des Russes in dem vorgesehenen Bereich.

**Beispiel 3**

Es wird ein Tiefdruckfirnis hergestellt aus folgenden Bestandteilen:

205 Gewichtsteile Erkazit 899
(Calciumresinat)
102,5 Gewichtsteile Erkazit 1380
(Zinkresinat)
102,5 Gewichtsteile Rokrapal 1410
(modifiziertes Phenolharz)
590 Gewichtsteile Toluol
Von diesem Firnis werden
220 Gewichtsteile mit
120 Gewichtsteilen Russ

225 Gewichtsteilen 40%iger Auflösung von
Gilsonit (Naturhartasphalt)
in Toluol, und
435 Gewichtsteilen Toluol
20 Stunden in einer Kugelmühle verarbeitet. Nach Ausführung der Dispergierung wird die Viskosität durch Bestimmung der Auslaufzeit aus einem ISO-Becher (DIN 53 224) bestimmt. Dann wird die Tiefdruckfarbe mit einer Labortiefdruckmaschine im Rotationsverfahren angedruckt.

Das erste Feld hat eine tiefe Ätzung (Vollton), das vierte Feld stellt eine flache Ätzung dar (Aufhellung). Beide Felder wurden mit einem Densitometer ausgemessen. Hoher Densitometerwert entspricht einer hohen Farbtiefe. Ausserdem wurde der Glanz am Vollton noch mit einem Goniophotometer gemessen. Die Ergebnisse sind der nachstehenden Tabelle zu entnehmen.

|  |  | Russ A 345 | Russ gemäss Erfindung | Printex® 200 |
|---|---|---|---|---|
| **Russeigenschaften** |  |  |  |  |
| Jodzahl | mg/g | 93 | 73 | 46 |
| BET-Oberfläche | m²/g | 85 | 68 | 45 |
| Teilchendurchmesser elektronenmikroskopisch | nm | 25 | 40 | 56 |
| DBP-Absorption | ml/100 g | 52 | 46 | 46 |
| Farbstärke | % | 117 | 104 | 88 |
| Viskosität ISO-Becher | s | 17,8 | 16,8 | 18,8 |
| **Optische Dichte** |  |  |  |  |
| erstes Feld |  | 2,39 | 2,41 | 2,29 |
| viertes Feld |  | 2,14 | 2,16 | 2,10 |
| **Glanz** | % | 56,0 | 61,0 | 57,0 |

In dem Tiefdrucksystem tritt die volle Überlegenheit der erfindungsgemässen Russe klar hervor. Er hat nicht nur die geringste Viskosität, sondern auch die höchsten optischen Dichten und den höchsten Glanz. Diese einzigartige Kombination war bisher unbekannt.

**Beispiel 4**

Obwohl es für die Art der Herstellung der in Anspruch 1 beanspruchten Russe eine Reihe von Herstellmöglichkeiten gibt, wird nachstehend ein Beispiel für die Herstellung angeführt.

Zur Herstellung wird eine Arbeitsweise benutzt, wie sie in der deutschen Patentanmeldung P 25 30 371.3 beschrieben ist. Bei dem Reaktor sind analog zu den Angaben folgende Daten spezifisch:

| Querschnittsflächenverhältnis Brennkammereintritt/Mischkammereintritt | 21 |
|---|---|
| Querschnittsflächenverhältnis Reaktionskammeraustritt/ Mischkammeraustritt | 49 |
| Brennkammerlänge/Mischkammerlänge | 1,8 |
| Ringkanallänge bezogen auf Mischkammerlänge | 17% |
| Stellung Russrohstoffinjektoraustritt in Mischkammer | |
| Sprühkegel/Russrohstoffzugabe | 45° |

**Einstellbedingungen**

|  |  | 4a | 4b |
|---|---|---|---|
| Verbrennungsluftmenge | Nm³/h | 1.550 | 1.550 |
| Gasmenge | Nm³/h | 135 | 135 |
| Russrohstoffmenge | kg/h | 640 | 690 |

| Russproduktion | kg/h | 423 | 463,7 |
|---|---|---|---|
| Ölausbeute | % | 66,1 | 67,2 |
| Additivzusatz (Kaliumchlorid) | kg/h | 1,3 | 1,3 |

**Analytische Russeigenschaften**

| | | 4a | 4b |
|---|---|---|---|
| Jodadsorption | mg/g | 72 | 63 |
| BET-Oberfläche | m²/g | 68 | 59 |
| DBP-Absorption | m/g | 46 | 47 |
| Farbstärke bez. auf IRB 3 | % | 104 | 98 |

Als Russrohstoff wurde hierbei ein carbochemisches Teeröl mit folgenden Eigenschaften verwendet:

| Dichte 20°C | g/ml | 1,137 |
|---|---|---|
| Destillationsrückstand | g/100 ml | 3,4 |
| Rückstand nach Conradson | % | 1,6 |
| Asphalthene | % | 1,1 |
| Benzolunlösliche | % | 0,02 |

**Siedeverhalten**

| Siedebeginn | °C | 241 |
|---|---|---|
| 5 Vol.-% | °C | 290 |
| 10 Vol.-% | °C | 306 |
| 20 Vol.-% | °C | 327 |
| 30 Vol.-% | °C | 335 |
| 40 Vol.-% | °C | 345 |
| 50 Vol.-% | °C | 352 |
| 60 Vol.-% | °C | 362 |
| 70 Vol.-% | °C | 375 |
| 80 Vol.-% | °C | 392 |

**Patentansprüche**

1. Russe für Druckfarben mit niedriger Fliessgrenze und Viskosität sowie guter Farbtiefe, dadurch gekennzeichnet, dass sie in folgendem Eigenschaftsbereich liegen:

| Jodadsorption | mg/g | 50 - 85 |
|---|---|---|
| BET-Oberfläche | m²/g | 50 - 80 |
| elektronenmikroskopischer Teilchendurchmesser | nm | 28 - 55 |
| DBP Absorption | ml/100 g | 40 - 60 |
| Farbstärke bez. auf IRB 3 | % | 90 - 110 |

2. Verwendung der Russe nach Anspruch 1 zur Herstellung hochwertiger Druckfarben.

**Claims**

1. Carbon blacks for printing inks having a low yield value and viscosity and a good jetness, characterised in that they lie within the following range of properties:

| Iodine adsorption | mg/g | 50 - 85 |
|---|---|---|
| BET surface | m²/g | 50 - 80 |
| Electron-microscopic particle diameter | nm | 28 - 55 |
| DBP absorption | ml/100 g | 40 - 60 |
| Tinting strengh rel. to IRB 3 | % | 90 - 110 |

2. Use of the carbon black according to claim 1 for the production of high-grade printing inks.

**Revendications**

1. Noirs de fumée pour encres d'imprimeries avec limite d'écoulement et viscosité faibles, ainsi qu'une bonne profondeur des couleurs, noirs de fumée caractérisés en ce qu'ils se situent dans les limites suivantes des propriétés:

| Adsorption d'iode | mg/g | 50 - 85 |
|---|---|---|
| Surface BET | m²/g | 50 - 80 |
| Diamètre des particules au microscope électronique | nm | 28 - 55 |
| Absorption DBP | ml/100 g | 40 - 60 |
| Intensité de coloration rapportée à IRB 3 | % | 90 - 110 |

2. Application des noirs de fumée selon la revendication 1 pour la fabrication d'encres d'imprimerie de grande qualité.